# EUROPÄISCHE PATENTSCHRIFT

(11) **EP 1 987 250 B1**
(45) Veröffentlichungstag und Bekanntmachung des Hinweises auf die Patenterteilung: **04.09.2013**
(21) Anmeldenummer: 07712205.9
(22) Anmeldetag: 12.02.2007
(51) Int. Cl.: F04B 17/00, F04B 17/03

(54) **ANTRIEBSEINRICHTUNG FÜR DIE ÖLPUMPE EINES KRAFTFAHRZEUGGETRIEBES**
DRIVE DEVICE FOR THE OIL PUMP OF A MOTOR VEHICLE TRANSMISSION
DISPOSITIF D'ENTRAÎNEMENT POUR LA POMPE À HUILE D'UNE BOÎTE DE VITESSES D'UN VÉHICULE AUTOMOBILE

(30) Priorität: 23.02.2006 DE 102006008430
(43) Veröffentlichungstag der Anmeldung: 05.11.2008
(73) Patentinhaber: ZF Friedrichshafen AG, 88038 Friedrichshafen (DE)
(72) Erfinder: RÖGNER, Horst, 88094 Oberteuringen (DE)
(86) Internationale Anmeldenummer: PCT/EP2007/051305
(87) Internationale Veröffentlichungsnummer: WO 2007/096258

(56) Entgegenhaltungen:
- DE-A1- 10 012 385
- DE-C1- 10 160 466
- DE-C1- 19 750 675
- GB-A- 2 273 323
- US-A- 5 427 196

## Beschreibung

Die Erfindung betrifft eine Antriebseinrichtung für die Ölpumpe eines Kraftfahrzeuggetriebes gemäß dem Oberbegriff des Patentanspruchs 1.

Insbesondere Automatgetriebe benötigen zur Schmierung sowie für die Versorgung der Steuer- und Betätigungseinrichtungen eine Ölpumpe, die bei allen Betriebszuständen die erforderliche Ölmenge und den erforderlichen Öldruck liefert.

Bei älteren Konstruktionen ist die Ölpumpe im Allgemeinen direkt oder indirekt mit dem Antriebsmotor antriebsverbunden, so dass sich die Drehzahl und damit die Pumpenleistung der üblicherweise als so genannte Konstantpumpe ausgebildeten Ölpumpe proportional zur Drehzahl des Antriebsmotors verändert. Um bereits beim Leerlauf des Antriebsmotors die insbesondere für die Funktion des Getriebes erforderlich Pumpenleistung zur Verfugung zu haben, erfolgt die Auslegung der Ölpumpe auf die Leerlaufdrehzahl des Antriebsmotors. Das bedeutet, dass die Ölpumpe bei höheren Drehzahlen des Antriebsmotors ein Mehrfaches der erforderlichen Menge fördert. Dadurch nehmen derartige Ölpumpen zuviel Leistung auf, neigen zur Kavitation und erzeugen ein verhältnismäßig hohes Betriebsgeräusch, Außerdem müssen die Kanalquerschnitte stark überdimensioniert werden. Ein weiterer Nachteil ist, dass bei stillstehendem Antriebsmotor überhaupt keine Pumpenleistung zur Verfügung sieht, so dass das Getriebe inaktiv ruht und somit nicht für anstehende Funktionen vorkonditioniert werden kann.

Um den ständig steigenden Anforderungen an das Getriebe bezüglich Spontaneität, Komfort und Verbrauchsreduzierung zu genügen, ist deshalb bereits vorgeschlagen worden, neben der vom Antriebsmotor angetriebenen Hauptölpumpe eine elektrisch angetriebene Zusatzölpumpe vorzusehen, die auch bei stillstehendem Antriebsmotor die erforderliche Ölversorgung des Getriebes bereitstellt und bei niedrigen Drehzahlen des Antriebsmotors die Hauptölpumpe unerstützt. Dies bedeutet jedoch einen erheblichen konstruktiven und baulichen Aufwand, da neben dem elektrischen Antrieb eine zweite Pumpe, eine Anbindung dieser Pumpe an den bestehenden hydraulischen Kreislauf sowie eine gesonderte Sensorik für die Schaltung der Zusatzölpumpe erforderlich wird. Außerdem ist die Unterbringung dieser zusatzlichen Bauelemente in den vorgegebenen Bauräumen häufig problematisch.

Aus der DE 197 50 675 C1 ist bereits eine Antriebsennchtung der im Oberbegriff des Anspruches 1 genannten Art bekannt, bei der die einzige Ölpumpe beim Motorsbllstand und bei Motordrehzahlen unterhalb einer vorgegebenen Grenzdrehzahl durch einen Elektromotor, oberhalb dieser Grenzdrehzahl durch den Antriebsmotor des Kraftfahrzeuges selbst angetrieben wird Bei dieser bekannten Konstruktion sind der Elektromotor und die Ölpumpe jeweils konzentrisch zueinander und zur Getriebeeingangswelle in einem gemeinsamen Gehause angeordnet, wobei die Ölpumpe als Innenzahnradpumpe mit angetnebenem Hohlrad ausgebildet ist Die feste Antriebsverbindung zwischen dem Rotor des Elektromotors und dem Hohlrad der Ölpumpe ist dadurch verwirklicht, dass der Rotor und das Hohlrad als ein integriertes Bauteil ausgebildet sind Da der Rotor des Elektromotors sich innerhalb des Pumpendruckraumes befindet, ergeben sich infolge einer notwendigen Vergrößerung des Hohlrades tribologische Probleme an dem eine Gleitlagerfunktion erfüllenden Hohlrad-Außendurchmesser, sowie Dichtspaltveränderungen im Temperaturverlauf durch die Paarung unterschiedlicher Materialien im Pumpendruckraum Außerdem muss bei der Materialauswahl der Pumpenbauteile deren Einfluss auf die Eigenschaften des elektrischen Zusatzantriebes berücksichtigt werden, welches diese Materialauswahl einschränkt.

Durch die DE 101 60 466 C1 ist zwar bereits eine Antriebseinrichtung ähnlich der im Oberbegriff des Anspruchs 1 genannten Art bekannt, bei der jedoch der Stator und der Rotor des Elektromotors außerhalb des Pumpengehäuses angeordnet sind. Die Antriebsverbindung zwischen dem Rotor des Elektromotors und dem angetriebenen Innenzahnrad einer Innenzahnradpumpe ist jedoch nicht fest ausgebildet, sondern erfolgt über einen gesonderten, auf der Getriebeeingangswelle drehbar gelagerten, hülsenartigen Verbindungsabschnitt, welcher mit dem Innenzahnrad fest verbunden ist und mit der Getriebeeingangswelle einerseits sowie dem Rotor des Elektromotors andererseits jeweils über eine gesonderte Überholkupplung koppelbar ist. Diese Anordnung gewährleistet zwar eine Entkopplung der beiden Antriebssysteme voneinander in der Weise, dass das jeweils inaktive Antriebssystem nicht vom aktiven Antriebssystem mitgeschleppt werden muss, ist jedoch wegen der zusätzlichen Überholkupplung sowie wegen des den außerhalb des Pumpengehäuses liegenden Rotor mit dem im Pumpengehäuse angeordneten Zahnrad verbindenden Verbindungsabschnittes konstruktiv und baulich verhältnismäßig aufwendig.

Vor diesem Hintergrund liegt der Erfindung die Aufgabe zugrunde, eine Antriebseinrichtung der im Oberbegriff des Anspruches 1 genannten Art zu schaffen, die bei einfachem konstruktiven und baulichen Aufwand die oben im Zusammenhang mit dem innerhalb des Pumpengehäuses angeordneten Elektromotor beschriebenen Nachteile nicht aufweist.

Die Lösung dieser Aufgabe ergibt sich aus den Merlcmalen des Hauptanspruches, während vorteilhafte Ausgestaltungen und Weiterbildungen der Erfindung den Unteransprüchen entnehmbar sind.

Der Erfindung liegt die Erkenntnis zugrunde, dass auch bei einer räumlichen Trennung des Rotors des Elektromotors vom angetriebenen Pumpenrad der Ölpumpe eine feste Verbindung zwischen diesen Bauteilen möglich und sinnvoll ist, da damit eine konstruktive und bauliche Vereinfachung der Antriebsverbindung erreicht wird.

Demnach geht die Erfindung aus von einer Antriebseinrichtung für die Ölpumpe eines Kraftfahrzeuggetriebes, insbesondere Automatgetriebes, wobei die Ölpumpe einerseits mittels einer Überholkupplung mit dem Antriebsmotor kuppelbar und andererseits mit einem zusätzlichen, vom Bordnetz des Kraftfahrzeuges gespeisten Elektromotor antriebsverbunden ist. Zur Lösung der gestellten Aufgabe ist dabei vorgesehen, dass der Elektromotor gemäß den kennzeichnenden Merkmalen angeordnet ist.

Durch die Anordnung des Elektromotors außerhalb des Pumpengehäuses werden insbesondere die weiter oben im Zusammenhang mit der DE 197 50 675 C1 beschriebenen Nachteile vermieden, so dass tribologische Probleme sowie Dichtspaltveränderungen im Temperaturverlauf durch Paarung unterschiedlicher Materialien im Pumpendruckraum entfallen. Ebenso ist die Materialwahl der Pumpenbauteile wegen der räumlichen Trennung ohne Einfluss auf die Eigenschaften des elektrischen Zusatzantriebes.

Wegen der unmittelbar drehfesten Antriebsverbindung zwischen dem Rotor des Elektromotors und dem angetriebenen Pumpenrad der Ölpumpe ergibt sich gegenüber der eingangs genannten DE 101 60 466 C1 eine erhebliche konstruktive und bauliche Vereinfachung, da ein gesonderter, auf der Getriebeeingangswelle drehbar gelagerter Verbindungsabschnitt sowie eine zweite Überholkupplung entfallen. Wegen der drehfesten Antriebsverbindung zwischen Rotor und Pumpenrad läuft der Rotor zwar auch dann um, wenn der elektrische Zusatzantrieb inaktiv ist; dies lässt sich jedoch gegebenenfalls vorteilhaft nutzen, indem während der Phase des mechanischen Antriebes der Ölpumpe der elelctrische Zusatzantrieb als Generator betrieben werden kann.

Weiterhin ist es bei der erfindungsgemässen An-triebseinrichtung vorgesehen, dass der in an sich bekannten Weise der Elektromotor zur Getriebeeingangswelle koaxial angeordnet ist und einen radial innenliegenden Rotor aufweist, wobei der Elektromotor in einem gesonderten Elektromotorgehäuse angeordnet ist, und bei welcher der Rotor in dem Elektromotorgehäuse drehgelagert ist sowie einen die Getriebeeingangswelle umgebenden Nabenfortsatz bildet, der über eine mechanische Antriebsverbindung drehfest mit der Ölpumpe bzw. einem angetriebenen Pumpenrad der Ölpumpe gekoppelt ist. Der Nabenfortsatz benötigt im Gegensatz zu dem Verbindungsabschnitt der DE 101 60 466 C1 keine eigene Drehlagerung gegenüber der Getriebeeingangswelle, da er einen Bestandteil des Rotors des Elektromotors bildet und über diesen im Elektromotorgehäuse drehgelagert ist.

In weiterer Ausgestaltung der Erfindung ist vorgesehen, dass der Nabenfortsatz des Rotors mittels einer Überholkupplung mit einem vom Antriebsmotor angetriebenen Bauteil koppelbar ist. Dieses Bauteil sollte vorzugsweise im Antriebsstrang vor einer gegebenenfalls vorhandenen Trennkupplung bzw. Anfahrkupplung liegen, da es dann auch bei geöffneter Kupplung vom laufenden Antriebsmotor drehangetrieben wird.

Gemäß einer anderen Ausgestaltung der Erfindung ist der Nabenfortsatz des Rotors mit dem Pumpenteil eines zwischen dem Antriebsmotor und dem Getriebe angeordneten hydrodynamischen Wandlers koppelbar. In einer konstruktiven Ausgestaltung dieses Merkmals ist vorgesehen, dass an dem Pumpenteil des hydrodynamischen Wandlers eine die Getriebeeingangswelle umgebende, sich in den Bereich des Elektromotors hin erstreckende Nabenhülse ausgebildet ist, und dass die Überholkupplung zwischen der Nabenhülse und dem Nabenfortsatz des Rotors angeordnet ist.

Eine konstruktiv besonders kompakte Lösung, bei welcher der durch den hydraulischen Kreislauf des hydrodynamischen Wandlers vorgegebene Bauraum besonders vorteilhaft genutzt wird, ergibt sich, wenn der Stator und der Rotor des Elektromotors für die Ölpumpe zwischen Wandler und Getriebe innerhralb eines an einer Frontplatte des Getriebes angeordneten, das Elektromotorgehäuse bildenden Deckels angeordnet sind, wie anhand eines Ausführungsbeispieles noch genauer dargelegt wird.

Eine weitere, im Sinne einer kompakten Bauweise vorteilhafte Ausgestaltung der Erfindung sieht vor, dass die Ölpumpe als zur Getriebeeingangswelle koaxiale Innenzahnradpumpe mit angetriebenem Innenrad ausgebildet ist und ein an das Elektromotorgehäuse axial anschließendes Pumpengehäuse umfasst, und dass der Nabenfortsatz des Rotors über eine die Getriebeeingangswelle koaxial umgebende Öffnung des Pumpengehäuses abdichtend in dieses hineinragt sowie über eine Verzahnung oder dergleichen mit dem Innenrad der Ölpumpe drehfest verbunden ist.

Dabei kann gemäß einer weiteren Ausgestaltung der Erfindung auch die gesamte Ölpumpe innerhalb des das Elektromotorgehäuse bildenden Deckels angeordnet sein.

Eine weitere, im Sinne einer kompakten Bauweise vorteilhafte Ausgestaltung der Erfindung sieht vor, dass die Ölpumpe als zur Getriebeeingangswelle koaxiale Flügelzellenpumpe mit angetriebenem Innenrad (FZP-Rotor) ausgebildet ist, die auf der dem Verbrennungsmotor bzw. der Frontplatte des Getriebes gegenüberliegenden Seite des Getriebes angeordnet ist. Die mit dem Verbrennungsmotor verbundene Antriebswelle dieser Flügelzellenpumpe durchgreift dabei das Getriebe in axialer Richtung, koaxial zur vorzugsweise als Hohlwelle ausgeführte Getriebeeingangswelle.

In einer Ausgestaltung dieser Flügelzellenpumpe kann, ähnlich wie bei der zuvor genannten Innenzahnradpumpe, vorgesehen sein, dass das Pumpengehäuse in den rückwandigen Deckel des Getriebes bzw. in die Getriebegehäuse-Rückwand integriert ist oder sich unmittelbar an diesen Deckel bzw. diese Rückwand anschließt, und dass sich das Elektromotorgehäuse unmittelbar an das Pumpengehäuse anschfießt oder in das Pumpengehäuse integriert ist. Der Elektromotor ist in diesem Fall also, wie auch die Pumpe, auf der Getriebeseite angeordnet, die dem Verbrennungsmotor gegenüberliegt, wahlweise auf der Getriebeseite der Pumpe oder auf der dem Getriebe abgewandten Seite der Pumpe.

In einer anderen Ausgestaltung der koaxial zur Getriebeeingangswelle angeordneten Flügelzellenpumpe wird vorgeschlagen, die Pumpe selber im Bereich der dem Verbrennungsmotor gegenüberliegenden Seite des Getriebes anzuordnen, die Antriebswelle der Pumpe zentriert durch das Getriebe zu führen, eine Wirkverbindung zwischen der Antriebswelle der Pumpe und dem Verbrennungsmotor vorzusehen, eine zusätzliche Wirkverbindung zwischen der Antriebswelle der Pumpe und dem Elektromotor vorzusehen und diesen Elektromotors, räumlich gesehen, in einem Bereich nahe dem Verbrennungsmotor, beispielsweise im Bereich der Frontplatte des Getriebes, koaxial zur Getriebeeingangswelle anzuordnen. Dabei kann die genannte Wirkverbindung zwischen Pumpenantriebswelle und Elektromotor einen Freilauf aufweise und kann im Falle dessen, dass die mit dem Verbrennungsmotor wirkverbundene Pumpenantriebswelle zentrisch innerhalb der Getriebeeingangswelle verläuft, beispielsweise eine magnetische oder induktive Drehmomentübertragung durch die als Hohlwelle auszubildende Getriehseingangswelle hindurch aufweisen.

Falls es der im Kraftfahrzeug vorhandene Einbauraum erfordert bzw. erlaubt, kann gemäß einer anderen Weiterbildung der Erfindung die Ölpumpe als zur Achse der Getriebeeingangswelle achsparallele Pumpe mit einer aus dem Pumpengehäuse heraus ragenden Pumpeneingangswelle ausgebildet sein, wobei der Nabenfortsatz des Rotors des Elektromotors mittels eines Übertragungsgetriebes mit der Pumpeneingangsuvelle drehfest verbunden ist. Diese Anordnung eröffnet beispielsweise die Möglichkeit, durch Wahl der Übersetzung des Übertragungsgetriebes die Pumpe sowohl bei Antrieb durch den Verbrennungsmotor als auch bei Antrieb durch den Elektromotor in ihrer Dimensionierung zu optimieren. So kann z.B. bei einer Übersetzung ins Schnelle die Pumpe kleiner ausgebildet werden, mit entsprechenden Vorteilen hin-sichtlich des Bauraumes, des Gewichtes, der Kosten und des Wirkungsgrades. Die Ölpumpe kann von beliebiger Art, beispielsweise als Flügelzellenpumpe ausgebildet sein.

Zur Erzielung einer besonders kompakten Bauweise der Ölpumpe kann hierbei vorgesehen sein, dass die Ölpumpe in der dem Verbrennungsmotor zugewandten Getriebe-Frontplatte integriert ist, wobei die Ölpumpe dann durch das Gehäuse des Elektromotors axial an der genannten Getriebe-Frontplatte fixiert wird. Es kann aber auch vorgesehen sein, dass die Ölpumpe innerhalb eines das Elektromotorgehäuse bildenden Deckels angeordnet ist, der dann mit der Frontplatte des Getriebes verdrehfest verbunden ist.

Die Erfindung umfasst auch weitere Anordnungsvarianten, beispielsweise eine Anordnung, bei der der Elektromotor achsparallel zu einer mit der Getriebeeingangswelle koaxialen Ölpumpe angeordnet ist, oder eine Anordnung, bei der sowohl der Elektromotor als auch die Ölpumpe achsparallel zur Getriebeeingangswelle angeordnet sind, wobei der Elektromotor und die Ölpumpe zueinander koaxial oder achsparallel angeordnet sein können.

Die Erfindung lässt sich anhand eines Ausführungsbeispiels weiter erläutern. Dazu ist der Beschreibung eine Zeichnung beigefügt. In dieser zeigt
- Fig. 1: einen Längsschnitt durch eine beispielhafte Antriebseinrichtung gemäß der Erfindung mit zur Getriebeeingangswelle koaxial angeordnetem Elektromotor und koaxial angeordneter Ölpumpe,
- Fig. 2: einen Längsschnitt durch eine beispielhafte Antriebseinrichtung gemäß der Erfindung mit zur Getriebeeingangswelle koaxial angeordnetem Elektromotor und achsparallel angeordneter Ölpumpe, und
- Fig.3: eine schematische Darstellung eines beispielhaften Getriebes mit einer Antriebseinrichtung gemäß der Erfindung, mit zur Getriebeeingangswelle koaxial angeordnetem Elektromotor und koaxial angeordneter Ölpumpe, die beide auf der dem Antriebsmotor des Getriebes gegenüber liegenden Seite des Getriebes angeordnet sind.

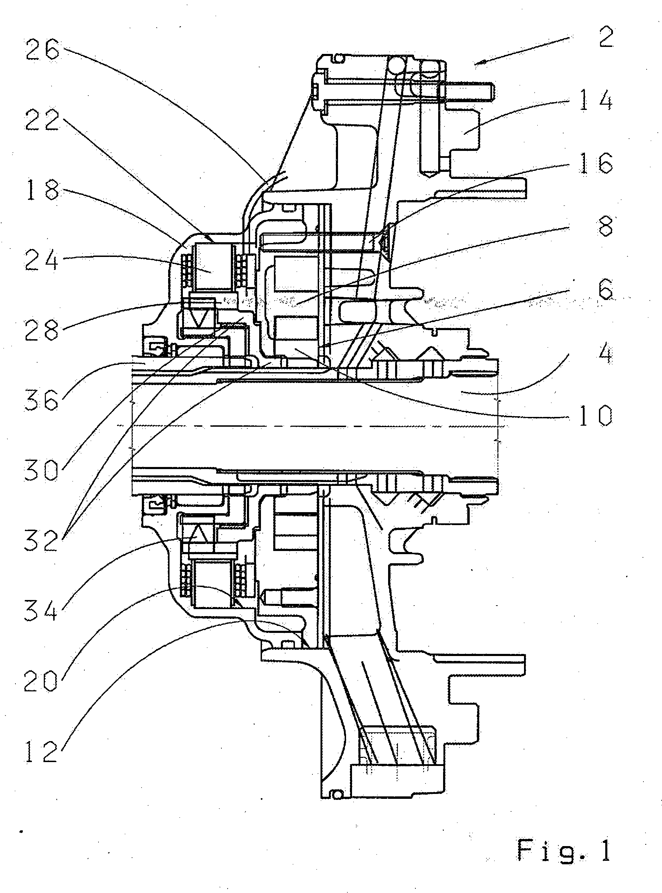

Die in Fig. 1 dargestellte beispielhafte erfindungsgemäße Antriebseinrichtung 2 dient zum Antrieb einer zur Eingangswelle 4 eines nicht dargestellten Getriebes koaxial angeordneten Ölpumpe 6 für die Schmieröl- und Druckölversorgung des Getriebes.

Die Ölpumpe-6 ist als herkömmliche und deshalb nicht im Einzelnen beschriebene Innenzahnradpumpe ausgebildet, und sie umfasst ein Pumpengehäuse 8, ein angetriebenes Innenrad 10 und ein mit diesem zusammenwirkendes, nicht dargestelltes Hohlrad.

Die Ölpumpe 6 ist in einem Aufnahmeraum 12 angeordnet, der an einer an der Stirnseite des nicht dargestellten Getriebes angeordneten Frontplatte 14 ausgebildet ist. Das Pumpengehäuse 8 ist über Befestigungsschrauben 16 in dem Aufnahmeraum 12 befestigt.

Der Aufnahmeraum 12 ist durch einen ein Elekirgmotorgehäuse 18 bildenden Deckel abgeschlossen, welcher einen weiteren, an den Aufnahmeraum 12 axial anschließenden Aufnahmeraum 20 bildet, in welchem der zu der Eingangswelle 4 und der Ölpumpe 6 koaxiale Elektromotor 22 angeordnet ist.

Der Elektromotor 22 umfasst einen fest im Elektromotorgehäuse 18 angeordneten Stator 24, welcher vom elektrischen Bordnetz bzw einer Lichtmaschine des Kraftfahrzeuges über eine Versorgungsleitung 26 mit Strom versorgt wird. Ein Rotor 28 ist radial innerhalb des Stators 24 angeordnet und über ein als Gleitlager oder Wälzlager ausgebildetes Lager 30 im Elektromotorgehäuse 18 drehbar gelagert. Der Rotor 28 bildet einen die Getriebeeingangswelle 4 umgebenden Nabenfortsatz 32, welcher über eine beliebige mechanische Antriebsverbindung, beispielsweise eine Verzahnung drehfest mit dem angetriebenen Innenrad 10 der Ölpumpe 6 gekoppelt ist.

Der Nabenfortsatz 32 des Rotors ist mittels einer Überholkupplung 34 mit einem von einem Antriebsmotor angetriebenen Bauteil koppelbar. In dem in Fig. 1 dargestellten Ausführungsbeispiel ist das vom Antriebsmotor angetriebene Bauteil durch eine die Getriebeeingangswelle 4 umgebende, sich bis in den Bereich des Elektromotors 22 erstreckende Nabenhülse 36 gebildet, die beispielsweise an dem mit dem Antriebsmotor verbundenen Pumpenteil eines hydrodynamischen Wandlers (oder an dem motorseitigen Teil einer mechanischen Kupplung) ausgebildet ist.

Die Überholkupplung 34 ist so ausgelegt, dass sie eine Drehung des Nabenfortsatzes 32 gegenüber der ruhenden oder langsamer laufenden Nabenhülse 36 erlaubt, jedoch dann, wenn die Drehzahl der Nabenhülse 36 größer als die des Nabenfortsatzes 32 wird, eine Mitnahmeverbindung zwischen diesen beiden Bauteilen herstellt.

Die Funktion der beschriebenen Antriebseinrichtung ist wie folgt:

Bei stehendem oder mit einer langsamen Drehzahl, beispielsweise einer Leerlaufdrehzahl oder einer geringfügig über der Leerlaufdrehzahl liegenden Drehzahl, laufendem Antriebsmotor wird die Ölpumpe 6 vom Elektromotor 22 mit einer derartigen Drehzahl angetrieben, die eine ausreichende Ölversorgung für die Schmierung und die Funktion des Getriebes sicherstellt. Wenn der Antriebsmotor eine Drehzahl erreicht, bei der die Nabenhülse 36 den Nabenfortsatz 32 überholt, greift die Überholkupplung 34, so dass die Ölpumpe 6 vom Antriebsmotor angetrieben wird. Zu diesem Zeitpunkt wird die Stromzufuhr zum Elektromotor 22 abgeschaltet. Da der Rotor 28 in diesem Betriebsmodus über den Nabenfortsatz drehangetneben wird, kann der Elektromotor dann als Generator betrieben werden.

Die erfindungsgemaße Anordnung ermöglicht es, auch bei stillstehendem Antriebsmotor im Automatgetriebe Gange geschaltet zu halten, wozu ein gewisser öldruck notznrenig rst Nach dem Motorstart entfallen daher KupplungsBefüllzeiten für den Anfahrgang, welches eine verbesserte Spontaneität der Betriebsfähigkeit des Antnebsstranges des Fahrzeuges bedeutet Ebenso kann die Getriebekühlung aufrechterhalten bleiben, wodurch das Getriebe für den nachfolgenden Anfahrvorgang vorkonditioniert bleibt Der elektrische Antrieb der Ölpumpe ermöglicht es so, den Verbrennungsmotor vorteilhaft mit einer Start-Stop-Funktionalität zu betreiben, ohne Verzögerungen beim Anfahren hinnehmen zu müssen Das Potential für eine Verbrauchs- und Abgasreduzierung ist erheblich. Ein weiterer Vorteil ergibt sich dadurch, dass die Möglichkeit zum Anschleppen des Antriebsmotors gegeben ist.

Bei laufendem Antriebsmotor kann der elektrische Zusatzantrieb bei niedrigen Motordrehzahlen weitere Funktionen übernehmen, beispielsweise eine Betätigung des Parksperrenzylinders, eine Kühlung des Wandlers zur Vermeidung einer Standaufheizung oder die Kühlung einer nassen Anfahrkupplung Bei einer geeigneten Dimensionierung des Elektromotors werden bei Vollhybridgetrieben weitere Funktionen ermöglicht wie das Schließen der Antriebskupplungen bei rein elektromotorischer Fahrt, das Kühlen der Anfahrkupplung bei Kriechfahrt oder während der Schlupfphase beim Start des Antriebsmotors USW.

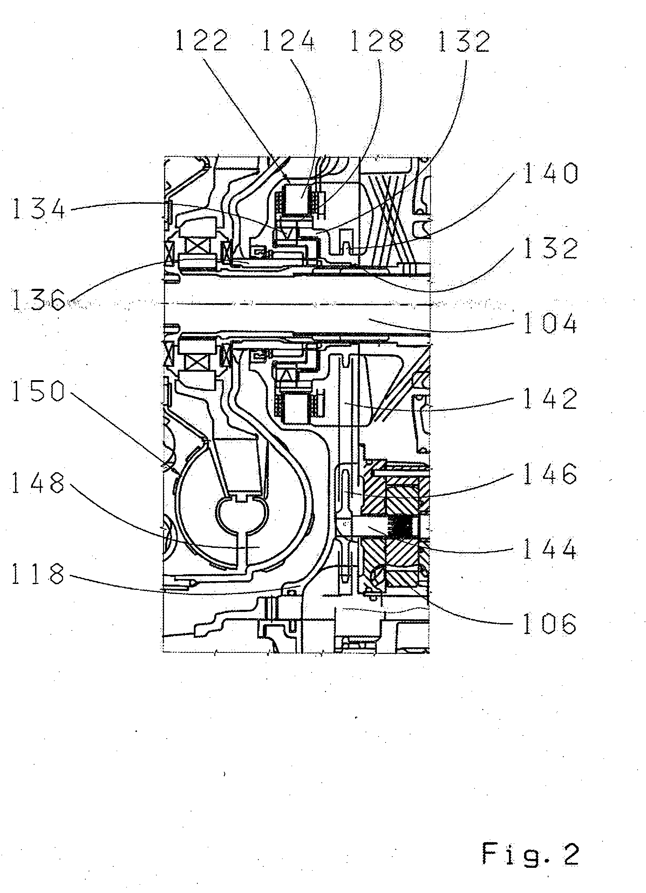

Fig. 2 zeigt in einem Teil-Längsschnitt eine beispielhafte Antriebseinrichtung gemäß der Erfindung, bei der im Gegensatz zur Fig. 1 eine achsparallel zur Getriebeeingangswelle 104 angeordnete Ölpumpe 106 vorgesehen ist

Ein Elektromotor 122 ist ähnlich wie in Fig. 1 aufgebaut und umfasst einen in einem ein Elektromotorgehäuse 118 bildenden Deckel angeordneten Stator 124 und einen in dem Elektromotorgehäuse 118 drehbar gelagerten Rotor 128, an welchem ein die Getriebeeingangswelle 104 umgebender Nabenfortsatz 132 ausgebildet ist. Der Nabenfortsatz 132 trägt ein Kettenrad oder eine Riemenscheibe 140, die über eine Kette bzw. einen Riemen 142 mit einem auf einer Pumpeneingangswelle 144 der Ölpumpe 106 angeordneten Kettenrad bzw. einer Riemenscheibe 146 drehfest antriebsverbunden ist.

An dem mit dem Antriebsmotor drehfest verbundenen Pumpenteil 148 eines zwischen dem Antriebsmotor und dem Getriebe angeordneten hydrodynamischen Wandlers 150 ist eine die Getriebeeingangswelle 104 umgebende Nabenhülse 136 ausgebildet, die sich bis in den Bereich des Elektromotors 122 erstreckt. Zwischen der Nabenhülse 136 und dem Nabenfortsatz 132 ist eine Überholkupplung 134 angeordnet, die den Nabenfortsatz 132 wie im Beispiel der Fig. 1 dann antreibt, wenn die Nabenhülse 136 den Nabenfortsatz 132 überholt.

Die Funktion der in Fig. 2 dargestellten Antriebseinrichtung entspricht der anhand der Fig. 1 beschriebenen Funktion.

Wie weiter vorne in der Beschreibungseinleitung dargelegt wurde, umfasst die Erfindung auch eine weitere Ausführungsform, die am Beispiel der Fig. 1 erläutert werden soll. Dabei wird die zur Getriebeeingangswelle 4 koaxiale Ölpumpe 6 von einem zur Getriebeeingangswelle achsparallelen, nicht dargestellten Elektromotor angetrieben, welcher beispielsweise über einen Kettenoder Riemenantrieb mit einem dem Nabenfortsatz 32 ähnlichen Nabenfortsatz fest antriebsverbunden ist. In diesem Fall ist anstelle des in Fig. 1 mit 28 bezeichneten Rotors ein Kettenrad oder eine Riemenscheibe vorgesehen, das bzw. die mit dem Elektromotor antriebsverbunden ist, wie im Einzelnen nicht dargelegt zu werden braucht. Um übrigen, also insbesondere in Bezug auf Aufbau und Anordnung der Ölpumpe 6 sowie der Verbindung des Innenrades 10 mit dem Nabenfortsatz 32 und der Überholkupplung 34 entspricht diese Konstruktion der in Fig. 1 gezeigten Bauform.

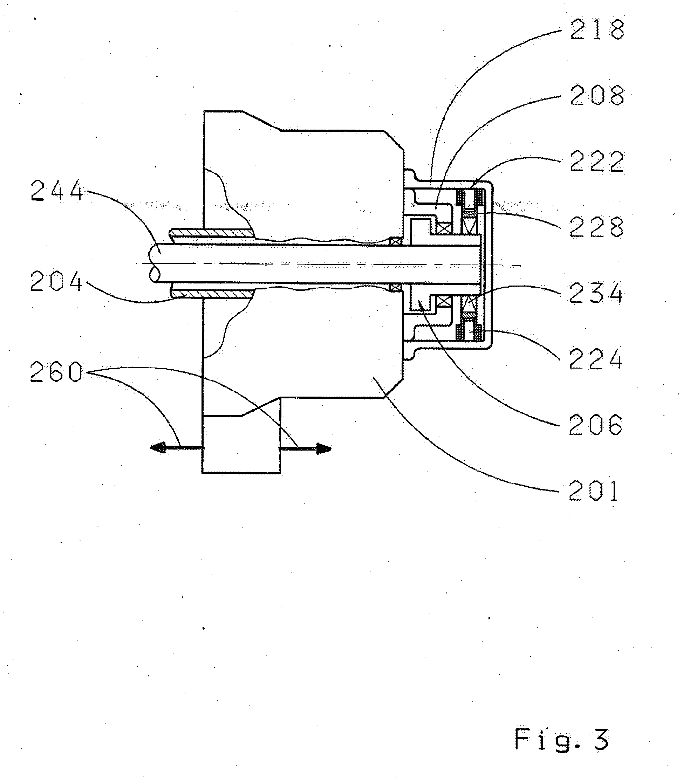

Fig. 3 zeigt eine stark vereinfachte schematische Darstellung eines beispielhaften Getriebes mit einer Antriebseinrichtung gemäß der Erfindung mit zur Getriebeeingangswelle koaxial angeordnetem Elektromotor und koaxial angeordneter Ölpumpe, wobei Elektromotor und Ölpumpe auf der Seite des Getriebes angeordnet ist, die dem Antriebsmotor des Getriebes gegenüberliegt. Diese Anordnung eignet sich in besonderer Weise für ein Kraftfahrzeug mit Front-Quer-Antrieb, bei dem Antriebsmotor und Getriebe quer zur Fahrtrichtung des Kraftfahrzeugs angeordnet sind, aber auch für ein Kraftfahrzeug mit Front-Längs- oder Heck-Längs-Antrieb, bei dem der Antriebsmotor längs zur Fahrt-richtung des Kraftfahrzeugs angeordnet ist und das Getriebe ein Differential aufweist. Das in Fig. 3 dargestellte beispielhafte Getriebe ist für einen Front-Quer-Antrieb vorgesehen.

In Fig. 3 ist das Getriebe mit 201 bezeichnet, die Getriebeeingangswelle mit 204, der achsparallel zur Getriebeeingangswelle 204 angeordnete Getriebeabtrieb mit 260. Die Getriebeeingangswelle 204 ist mit dem nicht näher dargestellten Antriebsmotor des Getriebes 201 wirkverbunden, beispielsweise in bekannter Weise über einen hydrodynamischen Wandler, wobei in diesem Fall die Getriebeeingangswelle 204 mit dem Pumpenrad dieses Wandlers verbunden ist. Die zur Ölversorgung des Getriebes vorgesehene Ölpumpe ist mit 206 bezeichnet, auf der Seite des Getriebes 201 angeordnet, die dem Antriebsmofor gegenüber liegt; und kann beispielsweise als kompakt bauende Flügelzellenpumpe oder als axial schmal bauende Innenzahnradpumpe ausgebildet sein. Das Pumpengehäuse ist mit 208 bezeichnet.

Zum einen wird die Ölpumpe 206 durch den in Fig. 3 nicht näher dargestellten Antriebsmotor des Getriebes 201 angetrieben. Hierzu ist eine Pumpeneingangswelle 244 vorgesehen, welche verdrehfest mit dem Pumpenrad des Ölpumpe 206 verbunden ist und das Getriebe 201 in ganzer axialen Länge zentrisch durchgreift. Hierzu ist die Getriebeeingangswelle 204 als eine Pumpeneingangswelle 244 koaxial umschließende Hohlwelle ausgebildet. Ist beispielsweise im Kraftfluss zwischen Antriebsmotor und Getriebeeingangswelle 204 ein hydrodynamischer Wandler vorgesehen, ist die genannte Pumpeneingangswelle 244 mit dem Turbinenrad dieses Wandlers verbunden.

Erfindungsgemäß ist die Ölpumpe 206 aber auch durch einen mit 222 bezeichneten Elektromotor antreibbar, welcher koaxial zur Getriebeeingangswelle 204 und koaxial zur Pumpeneingangswelle 244 angeordnet ist. Die Drehzahl und Drehmomentübertragung vom Elektromotor 222 zur Ölpumpe 206 funktioniert vergleichbar zu dem Ausführungsbeispiel gemäß Fig. 1. Das das Pumpengehäuse 208 umschließende Elektromotorgehäuse 218 ist mit dem Getriebegehäuse verdrehfest verbunden und nimmt den Stator 224 des Elektromotors 222 verdrehfest auf, in Fig. 3 beispielhaft auf der dem Antriebsmotor gegenüberliegenden Seite der Ölpumpe 206. Der zentrisch innerhalb des Stators 224 angeordnete drehbare Rotor 228 des Elektromotors 222 ist über eine Freilaufkupplung 234 mit dem angetriebenen Pumpenrad der Ölpumpe 206 bzw. mit der Pumpeneingangswelle 244 wirkverbunden. In einer von Fig. 3 abweichenden anderen Ausgestaltung kann beispielsweise aber auch vorgesehen sein, dass die Freilaufkupplung im Kraftfluss zwischen der ständig mit der Antriebswelle des Getriebes verbundenen Pumpeneingangswelle und dem Pumpenrad der Ölpumpe angeordnet ist und der Rotor des Elektromotors ständig mit dem Pumpenrad der Ölpumpe verbunden ist.

### Bezugszeichen

- 2: Antriebseinrichtung
- 4: Getriebeeingangswelle
- 6: Ölpumpe
- 8: Pumpengehäuse
- 10: Innenrad
- 12: Aufnahmeraum
- 14: Frontplatte
- 16: Befestigungsschrauben
- 18: Deckel/Elektromotorgehäuse
- 20: Aufnahmeraum
- 22: Elektromotor
- 24: Stator
- 26: Versorgungsleitung
- 28: Rotor
- 30: Lager
- 32: Nabenfortsatz
- 34: Überholleupplung
- 36: Nabenhülse
- 40: Kettenrad/Riemenscheibe
- 42: Kette/Riemen
- 44: Eingangswelle
- 46: Kettenrad/Riemenscheibe
- 48: Pumpenteil
- 50: hydrodynamischer Wandlers
- 104: Getriebeeingangswelle
- 106: Ölpumpe
- 118: Elektromotorgehäuse
- 122: Elektromotor
- 124: Stator
- 128: Rotor
- 132: Nabenfortsatz
- 134: Überholkupplung
- 136: Nabenhülse
- 140: Kettenrad/Riemenscheibe
- 142: Kette/Riemen
- 144: Pumpeneingangswelle
- 146: Kettenrad/Riemenscheibe
- 148: Pumpenteil
- 150: hydrodynamischer Wandler

- 201: Getriebe
- 204: Getriebeeingangswelle
- 206: Ölpumpe
- 208: Pumpengehäuse
- 218: Elektromotorgehäuse
- 222: Elektromotor
- 224: Stator
- 228: Rotor
- 234: Überholkupplung
- 244: Pumpeneingangswelle
- 260: Getriebeabtrieb

## Patentansprüche

1. Antriebseinrichtung für die Ölpumpe eines Kraftfahrzeuggetriebes, insbesondere eines Automatgetriebes, wobei die Ölpumpe (6) einerseits mittels einer Überholkupplung mit dem Antriebsmotor kuppelbar und andererseits mit einem zusätzlichen, vom Bordnetz des Kraftfahrzeuges gespeisten Elektromotor (22) antriebsverbunden ist, wobei der Elektromotor (22) außerhalb des Pumpengehäuses (8) in einem gesonderten Elektromotorgehäuse (18) koaxial zur Getriebeeingangswelle (4) angeordnet ist und einen radial innenliegenden Rotor (28) aufweist, **dadurch gekennzeichnet, dass** der Elektromotor (22) über eine drehfeste Antriebsverbindung permanent mit einem im Pumpengehäuse (8) angeordneten, angetriebenen Innenrad (10) der Ölpumpe (6) verbunden ist, wobei der Rotor (28) in dem Elektromotorgehäuse (18) drehgelagert ist und einen die Getriebeeingangswelle (4) umgebenden Nabenfortsatz (32) bildet, welcher über eine mechanische Antriebsverbindung drehfest mit dem angetriebenen Innenrad (10) der Ölpumpe (6) gekoppelt ist.

2. Antriebseinrichturig nach Anspruch 1, **dadurch gekennzeichnet, dass** der Nabenfortsatz (32) des Rotors (28) mittels einer Überholkupplung (34) mit einem vom Antriebsmotor angetriebenen Bauteil (Nabenhülse 36) koppelbar ist.

3. Antriebseinrichtung nach wenigstens Anspruch 2, **dadurch gekennzeichnet, dass** der Nabenfortsatz (32) des Rotors (28) mit dem Pumpenteil eines zwischen dem Antriebsmotor und dem Getriebe angeordneten hydrodynamischen Wandlers koppelbar ist.

4. Antriebseinrichtung nach Anspruch 3, **dadurch gekennzeichnet, dass** an dem Pumpenteil des hydrodynamischen Wandlers eine die Getriebeeingangswelle (4) umgebende, sich in den Bereich des Elektromotors (22) hin erstreckende Nabenhülse (36) ausgebildet ist, und dass die Überholkupplung (34) zwischen der Nabenhülse (36) und dem Nabenfortsatz (32) des Rotors (28) angeordnet ist.

5. Antriebseinrichtung nach zumindest einem der Ansprüche 1 bis 4, **dadurch gekennzeichnet, dass** der Stator (24) und der Rotor (28) des Elektromotors (22) innerhalb eines an einer Frontplatte (14) des Getriebes angeordneten, das Elektromotorgehäuse (18) bildenden Deckels angeordnet sind.

6. Antriebseinrichtung nach zumindest einem der Ansprüche 1 bis 5, **dadurch gekennzeichnet, dass** die Ölpumpe (6) als zur Getriebeeingangswelle (4) koaxiale Innenzahnradpumpe mit angetriebenem Innenrad (10) ausgebildet ist und ein an das Elektromotorgehäuse (18) axial anschließendes Pumpengehäuse (8) umfasst, und dass der Nabenfortsatz (32) des Rotors (28) über eine die Getriebedingangswelle (4) koaxial umgebende Öffnung des Pumpengehäuses (8) abdichtend in dieses hineinragt sowie über eine Verzahnung oder dergleichen mit dem Innenrad (10) der Ölpumpe (6) drehfest verbunden ist.

7. Antriebseinrichtung nach zumindest einem der Ansprüche 1 bis 5, **dadurch gekennzeichnet, dass** die Ölpumpe als zur Getriebeeingangswelle koaxiale Flügelzellenpumpe mit angetriebenem Innenrad ausgebildet ist und ein an das Elektromotorgehäuse anschließendes Pumpengehäuse umfasst, und dass der Nabenfortsatz des Rotors des Elektromotors über eine Öffnung des Pumpengehäuses abdichtend in dieses hineinragt sowie über eine Verzahnung oder dergleichen mit dem Innenrad der Ölpumpe drehfest verbunden ist.

8. Antriebseinrichtung nach Anspruch 7, **dadurch gekennzeichnet, dass** die Flügelzellenpumpe auf der dem Antriebsmotor gegenübertiegenden Seite des Getriebes angeordnet ist.

9. Antriebseinrichtung nach Anspruch 6, 7 oder 8, **dadurch gekennzeichnet, dass** die Ölpumpe (6) innerhalb des das Elektromotorgehäuse (18) bildenden Deckels angeordnet ist.

10. Antriebseinrichtung nach zumindest einem der Ansprüche 1 bis 5, **dadurch gekennzeichnet, dass** die Ölpumpe als zur Getriebeeingangswelle koaxiale Flügelzellenpumpe mit angetriebenem Innenrad ausgebildet ist, die auf der dem Antriebsmotor gegenüberliegenden Seite des Getriebes angeordnet ist, und dass der mit dem Innenrad der Flügelzellenpumpe verbundene Elektromotor auf der dem Antriebsmotor zugewandten Seite des Getriebes angeordnet ist.

11. Antriebseinrichtung nach zumindest einem der Ansprüche 1 bis 5, **dadurch gekennzeichnet, dass** die Ölpumpe (106) als zur Achse der Getriebeeingangswelle (104) achsparallele Pumpe mit einer aus dem Pumpengehäuse heraus ragenden Pumpeneingangswelle (144) ausgebildet ist, und dass der Nabenfortsatz (132) des Rotors (128) mittels eines Übertragungsgetriebes mit der Pumpeneingangswelle (144) drehfest verbunden ist.

12. Antriebseinrichtung nach Anspruch 11, **dadurch gekennzeichnet, dass** die Ölpumpe (106) innerhalb des das Elektromotorgehäuse (118) bildenden Deckels angeordnet ist.

13. Antriebseinrichtung nach Anspruch 12, **dadurch gekennzeichnet, dass** die Ölpumpe (106) innerhalb der Frontplatte (14) des Getriebes angeordnet ist.

## Claims

1. Drive device for the oil pump of a motor-vehicle transmission, in particular an automatic transmission, it being possible for the oil pump (6) to be connected on one side to the drive engine by means of an overrunning clutch, and the said oil pump (6) being drive-connected on the other side to an additional electric motor (22) which is fed by the vehicle-mounted electrical system, the electric motor (22) being arranged coaxially with respect to the transmission input shaft (4) outside the pump housing (8) in a separate electric-motor housing (18) and having a rotor (28) which lies radially on the inside, **characterized in that** the electric motor (22) is connected permanently via a rotationally fixed drive connection to a driven inner wheel (10) of the oil pump (6), which inner wheel (10) is arranged in the pump housing (8), the rotor (28) being mounted rotationally in the electric-motor housing (18) and forming a hub projection (32) which surrounds the transmission input shaft (4) and is coupled fixedly via a mechanical drive connection to the driven inner wheel (10) of the oil pump (6) so as to rotate with it.

2. Drive device according to Claim 1, **characterized in that** the hub projection (32) of the rotor (28) can be coupled by means of an overrunning clutch (34) to a component (hub sleeve 36) which is driven by the drive engine.

3. Drive device according to at least Claim 2, **characterized in that** the hub projection (32) of the rotor (28) can be coupled to the pump part of a hydrodynamic converter which is arranged between the drive engine and the transmission.

4. Drive device according to Claim 3, **characterized in that** a hub sleeve (36) which surrounds the transmission input shaft (4) and extends into the region of the electric motor (22) is formed on the pump part of the hydrodynamic converter, and **in that** the overrunning clutch (34) is arranged between the hub sleeve (36) and the hub projection (32) of the rotor (28).

5. Drive device according to at least one of Claims 1 to 4, **characterized in that** the stator (24) and the rotor (28) of the electric motor (22) are arranged within a cover which is arranged on a front plate (14) of the transmission and forms the electric-motor housing (18).

6. Drive device according to at least one of Claims 1 to 5, **characterized in that** the oil pump (6) is configured as an internal-gear pump, which is coaxial with respect to the transmission input shaft (4) and has a driven internal gear (10), and comprises a pump housing (8) which adjoins the electric-motor housing (18) axially, and **in that** the hub projection (32) of the rotor (28) protrudes sealingly into the pump housing (8) via an opening of the said pump housing (8), which opening surrounds the transmission input shaft (4) coaxially, and is connected fixedly via a toothing system or the like to the internal gear (10) of the oil pump (6) so as to rotate with it.

7. Drive device according to at least one of Claims 1 to 5, **characterized in that** the oil pump is configured as a vane cell pump, which is coaxial with respect to the transmission input shaft and has a driven internal gear, and comprises a pump housing which adjoins the electric-motor housing, and **in that** the hub projection of the rotor of the electric motor protrudes sealingly into the pump housing via an opening of the said pump housing and is connected fixedly via a toothing system or the like to the internal gear of the oil pump so as to rotate with it.

8. Drive device according to Claim 7, **characterized in that** the vane cell pump is arranged on that side of the transmission which lies opposite the drive engine.

9. Drive device according to Claim 6, 7 or 8, **characterized in that** the oil pump (6) is arranged within the cover which forms the electric-motor housing (18).

10. Drive device according to at least one of Claims 1 to 5, **characterized in that** the oil pump is configured as a vane cell pump which is coaxial with respect to the transmission input shaft, has a driven internal gear and is arranged on that side of the transmission which lies opposite the drive engine, and **in that** the electric motor which is connected to the internal gear of the vane cell pump is arranged on that side of the transmission which faces the drive engine.

11. Drive device according to at least one of Claims 1 to 5, **characterized in that** the oil pump (106) is configured as a pump which is axially parallel to the axis of the transmission input shaft (104) and has a pump input shaft (144) which protrudes out of the pump housing, and **in that** the hub projection (132) of the rotor (128) is connected fixedly by means of a transmission gear to the pump input shaft (144) so as to rotate with it.

12. Drive device according to Claim 11, **characterized in that** the oil pump (106) is arranged within the cover which forms the electric-motor housing (118).

13. Drive device according to Claim 12, **characterized in that** the oil pump (106) is arranged within the front plate (14) of the transmission.

## Revendications

1. Dispositif d'entraînement pour la pompe à huile d'une boîte de vitesses d'un véhicule automobile, en particulier d'une boîte de vitesses automatique, la pompe à huile (6) pouvant d'une part être accouplée au moteur d'entraînement au moyen d'un embrayage à roue libre et étant d'autre part reliée par entraînement à un moteur électrique supplémentaire (22) alimenté par le réseau de bord du véhicule automobile, le moteur électrique (22) étant disposé de manière coaxiale à l'arbre d'entrée de boîte de vitesses (4) à l'extérieur du carter de pompe (8) dans un carter de moteur électrique séparé (18) et comprenant un rotor (28) situé radialement à l'intérieur, **caractérisé en ce que** le moteur électrique (22) est relié en permanence par le biais d'une liaison d'entraînement solidaire en rotation à une roue intérieure entraînée (10), disposée dans le carter de pompe (8), de la pompe à huile (6), le rotor (28) étant monté à rotation dans le carter de moteur électrique (18) et formant un prolongement de moyeu (32) entourant l'arbre d'entrée de boîte de vitesses (4), lequel prolongement de moyeu est accouplé de manière solidaire en rotation à la roue intérieure entraînée (10) de la pompe à huile (6) par le biais d'une liaison d'entraînement mécanique.

2. Dispositif d'entraînement selon la revendication 1, **caractérisé en ce que** le prolongement de moyeu (32) du rotor (28) peut être accouplé, au moyen d'un embrayage à roue libre (34), à un composant (douille de moyeu 36) entraîné par le moteur d'entraînement.

3. Dispositif d'entraînement selon au moins la revendication 2, **caractérisé en ce que** le prolongement de moyeu (32) du rotor (28) peut être accouplé à la partie de pompe d'un convertisseur hydrodynamique disposé entre le moteur d'entraînement et la boîte de vitesses.

4. Dispositif d'entraînement selon la revendication 3, **caractérisé en ce qu'**une douille de moyeu (36) s'étendant dans la région du moteur électrique (22) et entourant l'arbre d'entrée de boîte de vitesses (4) est réalisée sur la partie de pompe du convertisseur hydrodynamique, et **en ce que** l'embrayage à roue libre (34) est disposé entre la douille de moyeu (36) et le prolongement de moyeu (32) du rotor (28).

5. Dispositif d'entraînement selon au moins l'une des revendications 1 à 4, **caractérisé en ce que** le stator (24) et le rotor (28) du moteur électrique (22) sont disposés à l'intérieur d'un couvercle formant le carter de moteur électrique (18) et disposé sur une plaque avant (14) de la boîte de vitesses.

6. Dispositif d'entraînement selon au moins l'une quelconque des revendications 1 à 5, **caractérisé en ce que** la pompe à huile (6) est réalisée sous forme de pompe à engrenage intérieur coaxiale à l'arbre d'entrée de boîte de vitesses (4) et pourvue d'une roue intérieure entraînée (10), et comporte un carter de pompe (8) se raccordant axialement au carter de moteur électrique (18), et **en ce que** le prolongement de moyeu (32) du rotor (28) pénètre, par le biais d'une ouverture du carter de pompe (8) entourant de manière coaxiale l'arbre d'entrée de boîte de vitesses (4), de manière étanche dans ce carter de pompe, et est relié de manière solidaire en rotation à la roue intérieure (10) de la pompe à huile (6) par le biais d'une denture ou similaire.

7. Dispositif d'entraînement selon au moins l'une quelconque des revendications 1 à 5, **caractérisé en ce que** la pompe à huile est réalisée sous forme de pompe à palettes coaxiale à l'arbre d'entrée de boîte de vitesses et pourvue d'une roue intérieure entraînée, et comporte un carter de pompe se raccordant au carter de moteur électrique, et **en ce que** le prolongement de moyeu du rotor du moteur électrique pénètre, par le biais d'une ouverture du carter de pompe, de manière étanche dans ce carter de pompe, et est relié de manière solidaire en rotation à la roue intérieure de la pompe à huile par le biais d'une denture ou similaire.

8. Dispositif d'entraînement selon la revendication 7, **caractérisé en ce que** la pompe à palettes est disposée du côté de la boîte de vitesses qui est opposé au moteur d'entraînement.

9. Dispositif d'entraînement selon la revendication 6, 7 ou 8, **caractérisé en ce que** la pompe à huile (6) est disposée à l'intérieur du couvercle formant le carter de moteur électrique (18).

10. Dispositif d'entraînement selon au moins l'une quelconque des revendications 1 à 5, **caractérisé en ce que** la pompe à huile est réalisée sous forme de pompe à palettes coaxiale à l'arbre d'entrée de boîte de vitesses et pourvue d'une roue intérieure entraînée, laquelle pompe à palettes est disposée du côté de la boîte de vitesses qui est opposé au moteur d'entraînement, et **en ce que** le moteur électrique relié à la roue intérieure de la pompe à palettes est disposé du côté de la boîte de vitesses qui est tourné vers le moteur d'entraînement.

11. Dispositif d'entraînement selon au moins l'une quelconque des revendications 1 à 5, **caractérisé en ce que** la pompe à huile (106) est réalisée sous forme de pompe dont l'axe est parallèle à l'axe de l'arbre d'entrée de boîte de vitesses (104) et qui est pourvue d'un arbre d'entrée de pompe (144) faisant saillie hors du carter de pompe, et **en ce que** le prolongement de moyeu (132) du rotor (128) est relié de manière solidaire en rotation à l'arbre d'entrée de pompe (144) au moyen d'un mécanisme de transmission.

12. Dispositif d'entraînement selon la revendication 11, **caractérisé en ce que** la pompe à huile (106) est disposée à l'intérieur du couvercle formant le carter de moteur électrique (118).

13. Dispositif d'entraînement selon la revendication 12, **caractérisé en ce que** la pompe à huile (106) est disposée à l'intérieur de la plaque avant (14) de la boîte de vitesses.
